# EUROPÄISCHE PATENTANMELDUNG

(11) **EP 2 838 052 A2**
(43) Veröffentlichungstag der Anmeldung: **18.02.2015**
(21) Anmeldenummer: 14184572.7
(22) Anmeldetag: 31.10.2003
(51) Int. Cl.: G06K 9/00

(54) **Verfahren zur Detektion der Relativbewegung eines Fingers gegenüber einer Sensorfläche**

(30) Priorität: 22.11.2002 DE 10254614
(62) Teilanmeldung aus: 03779681.0
(71) Anmelder: WI-LAN, Inc., Ottawa ON K1Y 4S1 (CA)
(72) Erfinder: Lorch, Henning, 80469 München (DE); Morguet, Peter, 81829 München (DE)
(74) Vertreter: Viering, Jentschura & Partner Patent- und Rechtsanwälte

(57) **Zusammenfassung**

Es wird ein Verfahren zur Detektion der Relativbewegung eines Fingers gegenüber einer Sensorfläche (1) bereitgestellt. Das Verfahren weist die Schritte auf: a) Ermitteln erster Kapazitätswert von Elektroden der Sensorfläche (1); b) Umsetzen, in einer Bildverarbeitungsvorrichtung (5), der ersten Kapazitätswerte in ein erstes Graustufenbild; c) Binarisieren des ersten Graustufenbildes in der Bildverarbeitungsvorrichtung (5) um ein erstes binarisiertes Bild eines ersten Teilbereiches der Sensorfläche zu erhalten; d) Übermitteln des ersten binarisierten Bildes an eine Bewegungsdetektionsvorrichtung (4) e) Wiederholen der Schritte a) bis c) um ein zweites binarisiertes Bild eines zweiten Teilbereiches der Sensorfläche (1) zu erhalten, wobei der zweite Teilbereich positionell versetzt ist von dem ersten Teilbereich; f) Übermitteln des zweiten binarisierten Bildes an die Bewegungsdetektionsvorrichtung (4); g) Ermitteln, in der Bewegungsdetektionsvorrichtung (4), von Bewegung des Fingers basierend auf dem ersten binarisierten Bild und dem zweiten binarisierten Bild, wobei die Bewegung des Fingers über mehrere Zeilen der Sensorfläche verfolgt wird.

## Beschreibung

Die Erfindung betrifft ein Verfahren zur Detektion der Relativbewegung eines Fingers gegenüber einer Sensorfläche.

Aus dem Stand der Technik sind Fingerabdrucksensoren bekannt, die in etwa die Größe des Bereiches eines Fingers haben, dessen Oberflächenstruktur ausgewertet werden soll. Am weitesten verbreitet sind Fingerabdrucksensoren, die auf einem kapazitiven Messverfahren basieren. Bei solchen Fingerabdrucksensoren ist auf einer Siliziumfläche eine Vielzahl von Elektroden gebildet, die jeweils eine Streukapazität zur Umgebung besitzen. Die Kapazität der gebildeten Kondensatoren hängt also von der Umgebung der Elektrode ab. Bei einem aufgelegten Finger kann aufgrund der Kapazität erkannt werden, ob die Elektrode einer Vertiefung des Fingers gegenüberliegt oder ob sie über eine Passivierungsschicht mit der Haut in Berührung ist.

Durch Auswertung der Kapazitätswerte kann ein Graustufenbild des Fingerabdrucks erstellt werden.

Der Nachteil solcher Fingerabdrucksensoren liegt in dem großen Flächenbedarf und den hohen Herstellungskosten, da eine Siliziumfläche in der Größe, die zum Erfassen eines vollständigen Fingerabdrucks erforderlich ist, teuer in der Herstellung ist.

Es sind Fingerabdrucksensoren, beispielsweise aus der EP 0 813 164 A1, bekannt geworden, die streifenförmig sind und dabei die Breite eines Fingers besitzen, während die Abmessung senkrecht dazu wesentlich kleiner ist. Die Herstellungskosten eines solchen Sensors sind wesentlich geringer.

Da der Finger über den Sensor bewegt wird, um ein vollständiges Abbild zu erhalten, müssen die während der Bewegung aufgenommenen Teilbilder wieder zu einem Gesamtbild zusammengesetzt werden. Problematisch ist hierbei, dass die Geschwindigkeit der Fingerbewegung im voraus nicht bekannt ist und darüber hinaus davon auszugehen ist, dass der Finger nicht geradlinig bewegt wird.

Bei dem aus der EP 0 813 164 A1 bekannten Verfahren werden die Teilbilder so aufgenommen, dass sich überlappende Bereiche ergeben und anhand der Überlappungen erkannt werden kann, wie die Teilbilder zusammenzusetzen sind. Dieses Verfahren ist sehr rechen- und darüber hinaus speicherintensiv. Aufgrund der Überlappungen ist eine Redundanz von Daten gegeben, aufgrund der das Zusammensetzen der Teilbilder durchgeführt werden kann. Die Überlappungen sind in der Regel viel größer als dies zur Berechnung der Anordnung der Teilbilder notwendig wäre. Dies rührt daher, dass im Voraus nicht bekannt ist, wie schnell der Finger bewegt wird. Falls der Finger wesentlich langsamer bewegt wird als dies theoretisch möglich wäre, erfolgt die Aufnahme der Teilbilder trotzdem mit der gleichen Rate wie bei einer schnellen Fingerbewegung. Folglich werden sehr viele redundante Daten aufgenommen und gespeichert.

Gerade bei miniaturisierten Systemen wie beispielsweise auf Chipkarten ist es von entscheidender Bedeutung, dass der Rechenaufwand der zu bewältigenden Aufgaben möglichst gering ist, da die Prozessoren von Chipkarten vergleichsweise leistungsschwach sind, was unter anderem darauf zurückzuführen ist, dass gerade bei kontaktlosen Chipkarten nicht beliebig viel Energie zur Verfügung steht, um eine höhere Rechenleistung bei einer höheren Taktfrequenz zu ermöglichen. Darüber hinaus hat eine Leistungssteigerung auch eine Kostensteigerung zur Folge, wodurch leistungsstarke Chipkarten in vielen Fällen unwirtschaftlich wären.

Eine andere Möglichkeit zur Erstellung eines vollständigen Abbilds eines Fingerabdrucks mit einem Streifensensor besteht darin, sowohl Teilbilder als auch eine Bewegungsfunktion des Fingers aufzunehmen, so dass anhand der Bewegungsfunktion die zueinander korrekte Positionierung von Teilbildern errechnet werden kann. Um auch bei einer schnellen Fingerbewegung später anhand der Bewegungsfunktion ein vollständiges Abbild erzeugen zu können, müssen Teilbilder mit einer verhältnismäßig großen Taktrate aufgenommen werden, obwohl dies bei einer langsamen Fingerbewegung an sich nicht notwendig wäre. Ansonsten entstünden Lücken im Abbild des Fingerabdrucks. Darüber hinaus ist problematisch, dass ein genaues Fingerabbild nur dann erzeugt werden kann, wenn die Bewegungsfunktion des Fingers sehr präzise ermittelt wird.

Aufgabe der Erfindung ist es daher, ein Verfahren zur Detektion der Relativbewegung eines Fingers gegenüber einer Sensorfläche anzugeben, das sehr genau ist und darüber hinaus einfach in der Realisierung ist, insbesondere keine hohen Anforderungen an den zur Verfügung stehenden Speicher und an die zur Verfügung stehende Rechenkapazität stellt. Außerdem soll eine geeignete Lesevorrichtung für Fingerabdrücke angegeben werden.

Die Aufgabe wird bezüglich des Verfahrens durch ein Verfahren mit den Schritten gelöst:
a) Aufnahme und Zwischenspeicherung eines ersten Teilbildes des Fingers in einem ersten Teilbereich der Sensorfläche
b) Verfolgung der Bewegung des Fingers anhand der Bewegung des ersten Teilbildes des Fingers durch Überwachung angrenzender Bereiche der Sensorflächen auf das Auftreten mit dem ersten Teilbild korrelierender Teilbilder und
c) Wiederholung des Schritts b), bis der verfolgte Abschnitt des Fingers einen vorbestimmten Bereich der Sensorfläche verlassen hat.

Eine die Aufgabe lösende Lesevorrichtung für Fingerabdrücke weist eine Sensorfläche zur Erfassung der Oberflächenstruktur eines mit der Sensorfläche in Kontakt befindlichen und sich dabei über der Sensorfläche bewegenden Fingers, eine Bildaufnahmevorrichtung zur Erstellung eines Bildes aus abschnittsweise aufgenommenen Teilbildern und eine mit der Bildaufnahmevorrichtung verbundene Ablaufsteuerung zur Steuerung des Ablaufs zum Lesen des Fingerabdrucks auf und ist durch eine mit der Ablaufsteuerung verbundene Bewegungsdetektionsvorrichtung zur Umsetzung des Verfahrens nach einem der Ansprüche 1 bis 15 gekennzeichnet.

Der Vorteil des erfindungsgemäßen Verfahrens besteht darin, dass sich die Verfolgung der Bewegung des Fingers beziehungsweise des ersten Teilbilds über einen weiteren Bereich eines Sensors erstreckt und so temporäre Fehler, beispielsweise Quantisierungsfehler, bei einer Weiterbewegung des Fingers ausgeglichen werden. Die Bewegungsparameter können beim Lesevorgang durch schnelle Logikschaltungen ermittelt werden, ohne dass umfangreiche Bilddaten zwischengespeichert und nachfolgend ausgewertet werden müssen. Das anfallende Datenvolumen ist daher sehr gering, wobei durch die Verfolgung über einen größeren Bereich der Sensorfläche eine extrem hohe Präzision erreicht wird.

Die Schritte a) bis c) werden vorteilhafterweise so lange wiederholt, bis die Bewegung des Fingers vorbestimmten Bedingungen genügt, beispielsweise so lange, bis der Finger nicht mehr mit der Sensorfläche in Berührung ist.

Die Verfolgung der Bewegung des Fingers erfolgt in einer vorteilhaften Ausgestaltung des Verfahrens durch die Schritte:
a) Festlegung eines zweiten, zum ersten Teilbereich benachbarten Teilbereichs der Sensorfläche,
b) fortlaufende Aufnahme eines zweiten Teilbildes in dem zweiten Teilbereich und Ermittlung einer Korrelation zwischen dem zweiten Teilbild und dem zwischengespeicherten ersten Teilbild und
c) Wiederholung des Schrittes b), bis die ermittelte Korrelation vorbestimmten Bedingungen genügt.

Auf diese Weise muss nur ein Teilbild zwischengespeichert werden.

Statt eines Vergleichs der Korrelation mit vorbestimmten absoluten Bedingungen kann auch ein Vergleich der im Schritt b) ermittelten Korrelation mit einer Korrelation eines neu aufgenommenen ersten Teilbildes mit dem zwischengespeicherten ersten Teilbild erfolgen, so dass also eine relative Bedingung erfüllt sein muss. Demnach läge eine Bewegung vor, wenn die erstgenannte Korrelation größer ist als die zweitgenannte Korrelation.

Zur weiteren Reduzierung des benötigten Speichers kann vorgesehen werden, dass der für die Bewegungsdetektion ausgewertete Teilbereich wesentlich schmaler als die Breite der Sensorfläche ist. Die Sicherheit und Präzision der Erkennung der Bewegung wird in einer vorteilhaften Ausgestaltung dadurch gesteigert, dass gleichzeitig Bewegungsdetektionen unter Verwendung unterschiedlicher Teilbereiche erfolgen und die Ergebnisse miteinander verknüpft werden.

Vorteilhafte Lesevorrichtungen für Fingerabdrücke besitzen eine Bewegungsdetektionsvorrichtung, die nach dem beschriebenen Verfahren arbeiten. Insbesondere ist es günstig, wenn die Ablaufsteuerung dazu eingerichtet ist, nach der Detektion einer definierten Weiterbewegung des Fingers durch die Bewegungsdetektionsvorrichtung die Bildaufnahmevorrichtung zur Aufnahme eines zur Ausgabe beziehungsweise Speicherung bestimmten Bildabschnitts zu veranlassen. Dies kann beispielsweise jeweils dann erfolgen, wenn die Bewegungsdetektionsvorrichtung erkennt, dass der Finger um eine Bildzeile weiterbewegt wurde, oder wenn der beobachtete Abschnitt des Fingers am Rand eines vorbestimmten Sensorbereichs angelangt ist.

Nach Erreichen des Randes des vorbestimmten Sensorbereichs wird im ersten Teilbereich ein neues erstes Teilbild aufgenommen und wiederum bis zum Rand eines vorbestimmten Sensorbereichs verfolgt.

Weiterhin ist vorteilhaft, wenn die Bewegungsdetektionsvorrichtung der Lesevorrichtung ein Filter zur Fehlerkorrektur aufweist.

Weitere vorteilhafte Ausgestaltungen der Erfindung sind in den Unteransprüchen angegeben.

Die Erfindung wird nachfolgend anhand eines Ausführungsbeispiels näher erläutert. Es zeigt:
- Figur 1: eine schematische Darstellung einer Lesevorrichtung für Fingerabdrücke,
- Figur 2: eine erweiterte Darstellung der Lesevorrichtung von Figur 1,
- Figur 3: ein Diagramm mit der tatsächlichen und der detektierten Fingerbewegung ohne Filterung und
- Figur 4: ein Diagramm wie in Figur 3 mit Filterung der Bewegungsfunktion.

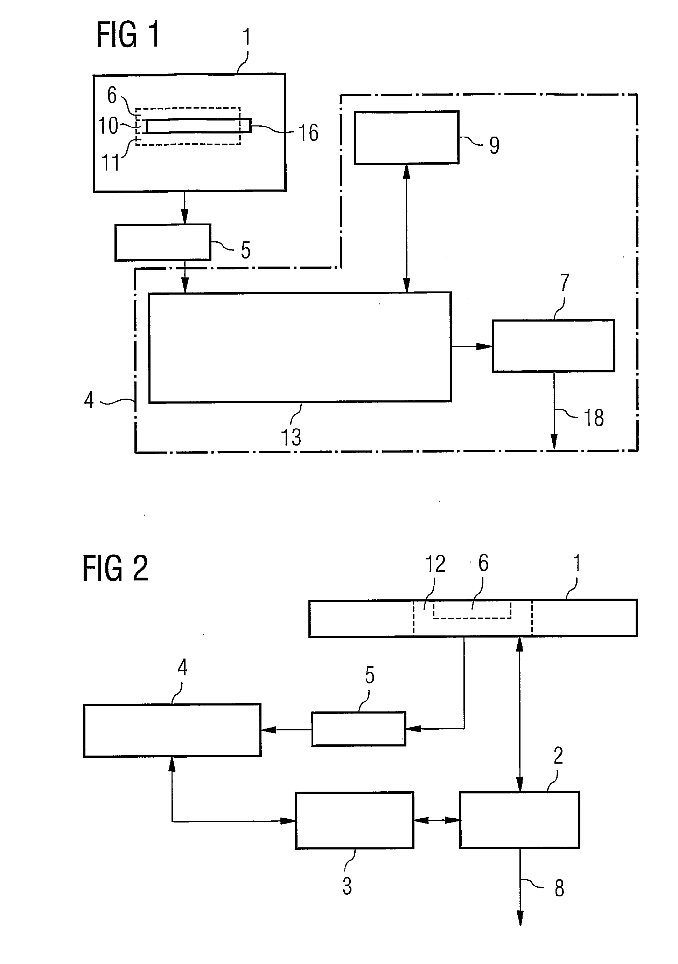

Die Figur 1 zeigt eine Lesevorrichtung für Fingerabdrücke mit einer Sensorfläche 1, einer Bildverarbeitungsvorrichtung 5, die die durch die Sensorfläche 1 ermittelten Kapazitätswerte in ein digitales Signal umsetzt, eine Bewegungsdetektionsvorrichtung 4, die aus den ermittelten Bilddaten die Bewegung eines Fingers gegenüber der Sensorfläche 1 ermittelt, und die eine Berechnungseinheit 13, einen Teilbildspeicher 9 und ein optionales Ausgangsfilter 7 aufweist. Das Ausgangsfilter 7 filtert die von der Berechnungseinheit 13 ermittelte Bewegungsfunktion, um eine fehlerkorrigierte bzw. geglättete Bewegungsfunktion 18 bereitstellen zu können.

Die Detektion einer Relativbewegung eines Fingers gegenüber der Sensorfläche 1 erfolgt dadurch, dass zunächst ein Teilbild in einem ersten Teilbereich 6 der Sensorfläche 1 aufgenommen wird. Nach der Binarisierung durch die Bildverarbeitungsvorrichtung 5 legt die Bewegungsdetektionsvorrichtung 4 das Teilbild in dem Teilbildspeicher 9 ab. Zur Erläuterung der Funktionsweise wird angenommen, dass sich der Finger nun so weiterbewegt, dass das ursprüngliche Teilbild des Teilbereichs 6 nun in einem verschobenen Bereich 16 zu liegen kommt.

In einer ersten Variante wird nun ein zweiter Teilbereich 10 betrachtet, der im Ausführungsbeispiel von Figur 1 an den ersten Teilbereich 6 angrenzt. In diesem wird fortlaufend überwacht, ob sich die erfassten Daten ändern. Durch die beschriebene Verschiebung des Fingers ändern sich auch die erfassten Daten im zweiten Teilbereich 10.

Die im Teilbereich 10 fortlaufend aufgenommenen Teilbilder werden ebenfalls binarisiert und von der Berechnungseinheit 13 mit dem gespeicherten ersten Teilbild im Teilbildspeicher 9 verglichen. Der Vergleich wird dabei so ausgeführt, dass nicht nur identische Bilder erkannt werden, sondern dass eine Korrelation zwischen dem ersten und dem fortlaufend aufgenommenen zweiten Teilbild erkannt wird.

In einer zweiten Variante werden mehrere zweite Teilbereiche festgelegt, die fortlaufend überwacht werden, wobei die Korrelationen der zweiten Teilbilder mit dem ersten Teilbild gleichzeitig ausgewertet werden. Während bei der ersten Variante eine seitliche Verschiebung des Fingers zu einer verschlechterung der Korrelation führt, ergibt sich in der zweiten Variante eine seitliche Verschiebung des Fingers aus der Bestimmung des zweiten Teilbilds, das die höchste Korrelation mit dem ersten Teilbild aufweist. Die zweiten Teilbereiche werden beispielsweise so festgelegt, dass sie jeweils um ein Pixel verschoben sind.

Je nach Anwendungsfall erfolgt die Festlegung der zweiten Teilbereiche in einer Hauptrichtung oder in mehrere Richtungen ausgehend von dem ersten Teilbereich. Ein Fingerabdrucksensor, bei dem der Finger in einer Richtung über die Sensorfläche bewegt werden soll, würde also beispielsweise diese Hauptrichtung sowie die anrenzenden Richtungen berücksichtigen, um die Bewegung des Fingers in dieser Hauptrichtung und geringe laterale Abweichungen davon zu erfassen. Alle Richtungen würde ein Sensor berücksichtigen, wenn mittels der Sensorfläche ein Cursor auf einem Bildschirm gesteuert werden soll, so dass eine Bewegung in jeder Richtung eines zweidimensionalen Koordinatensystems detektiert werden muss. Eine solche Anwendung ist bei einem sogenannten Touchpad oder einem Touchscreen gegeben. So lassen sich neuartige, kleine und pixelgenaue Zeigegeräte realisieren, die z. B. Platz in Mobiltelefonen finden.

Nach der Erkennung eines korrelierenden zweiten Teilbildes werden die Koordinaten des zweiten Teilbereichs beziehungsweise der zweiten Teilbereiche in den an den bisherigen zweiten Teilbereich beziehungsweise an den zweiten Teilbereich mit der höchsten Korrelation angrenzenden Bereich der Sensorfläche 1 "verschoben", also dort neu festgelegt. Im folgenden vergleicht die Bewegungsdetektionsvorrichtung 4 die in dem neu festgelegten zweiten Teilbereich 11 beziehungsweise den neu festgelegten zweiten Teilbereichen aufgenommenen Teilbilder mit dem im Teilbildspeicher 9 gespeicherten ersten Teilbild.

Bei der Berechnung der Korrelation erkennt die Bewegungsdetektionsvorrichtung 4 eine seitliche Abweichung der aufgenommenen Teilbilder gegenüber dem ersten Teilbild. Durch diese Information in Verbindung mit der Information, wann eine Korrelation überhaupt vorliegt, ist es der Berechnungseinheit 13 der Bewegungsdetektionsvorrichtung 4 möglich, eine genaue Bewegungsfunktion des Fingers, der über die Sensorfläche 1 bewegt wird, zu ermitteln.

Die oben beschriebenen Verfahrensschritte werden so lange fortgesetzt, bis der jeweils neu festgelegte zweite Teilbereich am unteren Rand der Sensorfläche 1 angrenzt.

Um danach die weitere Bewegung des Fingers detektieren zu können, wird der erste Teilbereich 6 neu ausgelesen und in dem Teilbildspeicher 9 abgelegt. Das beschriebene Verfahren kann anschließend wiederholt durchgeführt werden, diesmal mit den neu gelesenen und gespeicherten Daten des ersten Teilbereichs. Je nach seitlichem Versatz kann in einer optimierten Auslegung der erste Teilbereich gegenüber dem ursprünglichen ersten Teilbereich verschoben festgelegt werden. Durch das Verfolgen eines Bildabschnitts 16 über mehrere Zeilen der Sensorfläche 1 werden temporäre Abweichungen, z.B. durch Quantisierungsrauschen, automatisch korrigiert. Da im vorliegenden Fall nur zwei kleine Teilbereiche miteinander verglichen werden müssen, ist die erforderliche Hardware sehr einfach und die Berechnungseinheit 13 kann durch schnelle und kostengünstige Logikschaltungen realisiert werden.

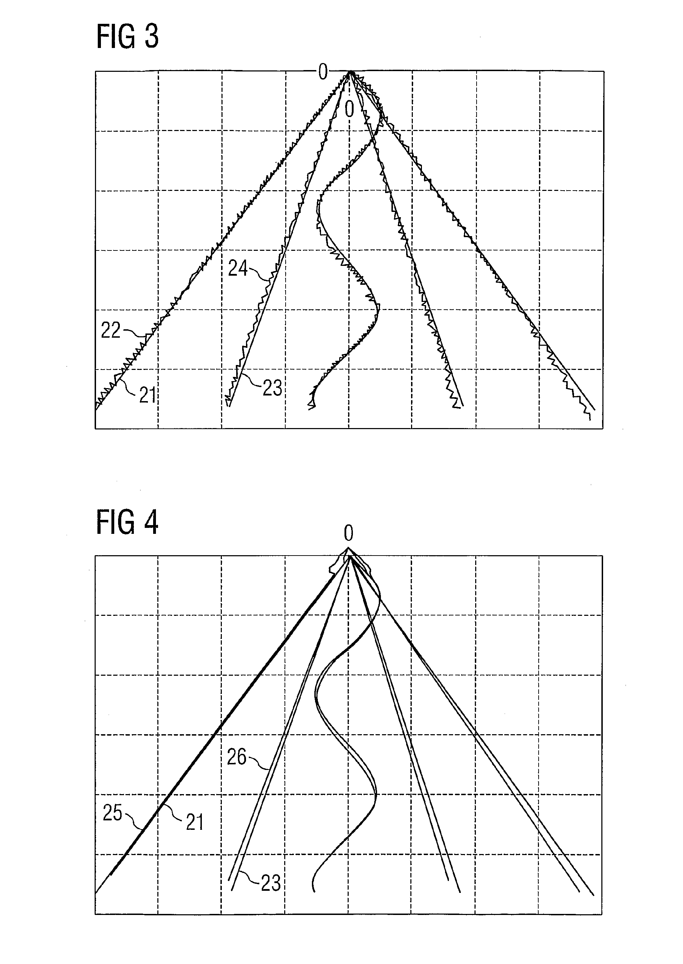

In der Figur 3 ist anhand eines Diagramms gezeigt, wie beispielsweise die tatsächliche Bewegung des Fingers verläuft und die dazu ermittelte Bewegungsfunktion. Die Geraden 21 und 23 entsprechen dabei tatsächlichen beispielhaften Bewegung des Fingers, während die Linien 22 und 24 die durch die Bewegungsdetektionsvorrichtung 4 ermittelte Bewegungsfunktion zeigen.

In der Lesevorrichtung von Figur 1 ist, wie oben beschrieben, ein Filter 7 vorgesehen, das die von der Bewegungsdetektionsvorrichtung 4 ermittelte Bewegungsfunktion glättet, so dass das Ausgangssignal 8 eine weitere Verbesserung erfährt. Eine solche gefilterte Bewegungsfunktion ist in der Figur 4 dargestellt. Die Geraden 21 und 23 entsprechen wiederum beispielhaften tatsächlichen Bewegungen des Fingers, während die Linien 25 und 26 die durch die Bewegungsdetektionsvorrichtung 4 ermittelte und durch das Filter 2 geglättete Funktionen zeigen.

In der Figur 2 ist eine erweiterte Lesevorrichtung für Fingerabdrücke gezeigt. Die Sensorfläche 1 besitzt in etwa die Breite eines Fingers. Ein Teil 12 der Sensorfläche 1 wird zur Bewegungsdetektion genutzt. Der erste Teilbereich 6 befindet sich horizontal in der Mitte des Sensorteils 12 an der in Figur 2 oberen Kante. Der erste Teilbereich 6 kann eine Höhe von mehreren Sensorzeilen besitzen. Der zweite Teilbereich, der zur Ermittlung des zweiten Teilbildes ausgewertet wird, wird bei dieser Ausführung nicht an den ersten Teilbereich direkt angrenzend festgelegt, sondern er ist lediglich um ein Pixel verschoben, so dass es zu einer Überlappung kommt. Dies ist in Figur 2 nicht dargestellt, um die Übersichtlichkeit der Figur zu wahren.

In der Figur 1 ist eine Bildverarbeitungsvorrichtung 5, eine Bewegungsdetektionsvorrichtung 4 sowie eine Bildaufnahmevorrichtung 2 vorgesehen. Der Teilbildspeicher 9 ist der Übersichtlichkeit halber nicht dargestellt. Darüber hinaus ist eine Ablaufsteuerung 3 vorgesehen. Die Ablaufsteuerung 3 regelt die Benutzung der Lesevorrichtung. Wenn die Bewegungsdetektionsvorrichtung 4 meldet, dass der Finger auf der Sensorfläche 1 eine Sensorzeile weiterbewegt wurde, unterbricht die Ablaufsteuerung 3 die Bewegungsdetektion, triggert die Bildaufnahme durch die Bildaufnahmevorrichtung 2, wobei eine Zeile in der gesamten Breite der Sensorfläche 1 aufgenommen wird, und schaltet danach wieder die Bewegungsdetektion ein. Auf diese Weise wird in der Bildaufnahmevorrichtung 2 ein Fingerabbild zeilenweise erzeugt, wobei automatisch ein seitlicher Versatz durch eine schräge Bewegung des Fingers ausgeglichen wird. Die Bilddaten werden entweder fortlaufend ausgegeben, oder es wird ein vollständiges Bild erstellt und es wird dann das gesamte Bild ausgegeben.

Wie oben ausgeführt, erlaubt die Anwendung des erfindungsgemäßen Verfahrens, dass das Quantisierungsrauschen herausgefiltert wird. Dadurch ist es möglich, für die Bewegungserkennung die Anzahl der Graustufen der Bilddaten zu reduzieren und sogar Binärbilder zu verwenden. Die weiteren erforderlichen Logikschaltungen zur Bewegungserkennung werden somit erheblich vereinfacht und können platzsparend aufgebaut werden. Gleichzeitig sinkt der Leistungsbedarf der Schaltung. Die von der Bildaufnahmevorrichtung 2 erzeugten Bilder können trotzdem in Graustufen ausgegeben werden, da die Erfassung der Daten zur Ausgabe oder Speicherung unabhängig von der Erfassung der Daten zur Bewegungsdetektion ist.

Die beschriebene Lesevorrichtung ist darüber hinaus auch deswegen sehr kompakt, weil zur Bewegungsdetektion ein Teil der Sensorfläche genutzt wird, die zur Aufnahme des Bildes ohnehin erforderlich ist. Gegenüber Lesevorrichtungen für Fingerabdrücke, die zusätzliche Bewegungssensoren verwenden, ergibt sich daher eine weitere Vereinfachung, die zur Platz- und Kostenersparnis führt.

Es wird ein Verfahren zur Detektion der Relativbewegung eines Fingers gegenüber einer Sensorfläche bereitgestellt, das Verfahren mit den Schritten:
a) Aufnahme und Zwischenspeicherung eines ersten Teilbildes des Fingers in einem ersten Teilbereich der Sensorfläche,
b) Verfolgung der Bewegung des Fingers anhand der Bewegung des ersten Teilbildes des Fingers durch Überwachung angrenzender Bereiche der Sensorfläche auf das Auftreten mit dem zwischengespeicherten ersten Teilbild korrelierender Teilbilder und
c) Wiederholung des Schritts b), bis der verfolgte Abschnitt des Fingers einen vorbestimmten Bereich der Sensorfläche verlassen hat.

Alternativ oder zusätzlich kann das Verfahren aufweisen, dass die Schritte a) bis c) wiederholt werden, solange der Finger mit der Sensorfläche in Berührung ist oder bis die Bewegung des Fingers einer vordefinierten Bedingung genügt. Alternativ oder zusätzlich kann das Verfahren aufweisen, dass die Verfolgung der Bewegung des Fingers folgende Schritte beinhaltet:
a) Festlegung eines zweiten, relativ zum ersten Teilbereich verschobenen Teilbereichs der Sensorfläche,
b) fortlaufende Aufnahme eines zweiten Teilbildes in dem zweiten Teilbereich und Ermittlung einer Korrelation zwischen dem zweiten Teilbild und dem zwischengespeicherten ersten Teilbild und
c) Wiederholung des Schrittes b), bis die ermittelte Korrelation vorbestimmten Bedingungen genügt.

Alternativ oder zusätzlich kann das Verfahren aufweisen, dass die Verfolgung der Bewegung des Fingers folgende Schritte beinhaltet:
a) Festlegung eines zweiten, relativ zum ersten Teilbereich verschobenen Teilbereichs der Sensorfläche,
b) fortlaufende Aufnahme eines zweiten Teilbildes in dem zweiten Teilbereich und Ermittlung einer Korrelation zwischen dem zweiten Teilbild und dem zwischengespeicherten ersten Teilbild,
c) erneute Aufnahme eines ersten Teilbildes in dem ersten Teilbereich und Ermittlung der Korrelation zwischen dem neu aufgenommenen ersten Teilbild und dem zwischengespeicherten ersten Teilbild,
d) Wiederholung der Teilschritte der Schritte b) und c), bis die im Schritt b) ermittelte Korrelation größer ist als die im Schritt c) ermittelte Korrelation.

Alternativ oder zusätzlich kann das Verfahren aufweisen, dass die Verfolgung der Bewegung des Fingers folgende Schritte beinhaltet:
a) Festlegung mehrerer zweiter, relativ zum ersten Teilbereich verschobener Teilbereiche der Sensorfläche,
b) fortlaufende Aufnahme zweiter Teilbilder in den zweiten Teilbereichen und Ermittlung von Korrelationen zwischen den zweiten Teilbildern und dem zwischengespeicherten ersten Teilbild,
c) Bestimmung des zweiten Teilbildes mit der größten Korrelation mit dem ersten Teilbild und
d) Wiederholung des Schritts b) oder der Schritte b) und c), bis die ermittelte Korrelation vorbestimmten Bedingungen genügt.

Alternativ oder zusätzlich kann das Verfahren aufweisen, dass die Verfolgung der Bewegung des Fingers folgende Schritte beinhaltet:
a) Festlegung mehrerer zweiter, relativ zum ersten Teilbereich verschobener Teilbereiche der Sensorfläche,
b) fortlaufende Aufnahme zweiter Teilbilder in den zweiten Teilbereichen und Ermittlung von Korrelationen zwischen den zweiten Teilbildern und dem zwischengespeicherten ersten Teilbild,
c) Bestimmung des zweiten Teilbildes mit der größten Korrelation mit dem ersten Teilbild
d) fortlaufende Aufnahme eines ersten Teilbildes in dem ersten Teilbereich und Ermittlung der Korrelation zwischen dem neu aufgenommenen ersten Teilbild und dem zwischengespeicherten ersten Teilbild,
e) Wiederholung der Schritte b) bis d), bis die im Schritt b) ermittelte Korrelation größer ist als die im Schritt d) ermittelte Korrelation.

Alternativ oder zusätzlich kann das Verfahren aufweisen, dass nach Ermittlung eines korrelierenden zweiten Teilbildes der seitliche Versatz gegenüber dem ersten Teilbild ermittelt wird.

Alternativ oder zusätzlich kann das Verfahren aufweisen, dass der zeitliche Abstand bis zum Auftreten eines korrelierenden zweiten Teilbildes in einem der zweiten Teilbereiche ermittelt wird.

Alternativ oder zusätzlich kann das Verfahren aufweisen, dass gleichzeitig eine Bewegungsdetektion unter Verwendung unterschiedlicher Teilbereiche erfolgt.

Es wird eine Lesevorrichtung für Fingerabdrücke bereitgestellt, die Lesevorrichtung mit:
- einer Sensorfläche zur Erfassung der Oberflächenstruktur eines mit der Sensorfläche in Kontakt befindlichen und dabei sich über die Sensorfläche bewegenden Fingers,
- einer Bildaufnahmevorrichtung zur Erstellung eines Bildes aus abschnittsweise aufgenommenen Teilbildern,
- einer mit der Bildaufnahmevorrichtung verbundenen Ablaufsteuerung zur Steuerung des Ablaufs beim Lesen eines Fingerabdrucks, und ferner aufweisend:
eine mit der Ablaufsteuerung verbundene Bewegungsdetektionsvorrichtung zur Umsetzung des oben beschriebenen Verfahrens.

Alternativ oder zusätzlich kann die Lesevorrichtung derart eingerichtet sein, dass die Ablaufsteuerung dazu eingerichtet ist, nach der Detektion einer definierten Weiterbewegung des Fingers durch die Bewegungsdetektionsvorrichtung die Bildaufnahmevorrichtung zur Aufnahme eines zur Ausgabe bestimmten Bildabschnitts zu veranlassen.

Alternativ oder zusätzlich kann die Lesevorrichtung derart eingerichtet sein, dass die Ablaufsteuerung dazu eingerichtet ist, die Aufnahme einer zur Ausgabe beziehungsweise Speicherung bestimmten Bildzeile nach der Weiterbewegung des Fingers um eine Sensorzeile zu veranlassen.

Alternativ oder zusätzlich kann die Lesevorrichtung derart eingerichtet sein, dass die Ablaufsteuerung dazu eingerichtet ist, die Aufnahme eines zur Ausgabe beziehungsweise Speicherung bestimmten Bildabschnittes zu veranlassen, wenn die Bewegungsdetektionsvorrichtung bei der Verfolgung des Fingers den Rand eines vorbestimmten Sensorbereiches erreicht hat.

Alternativ oder zusätzlich kann die Lesevorrichtung derart eingerichtet sein, dass die Bewegungsdetektionsvorrichtung ein Filter zur Fehlerkorrektur aufweist.

Alternativ oder zusätzlich kann die Lesevorrichtung derart eingerichtet sein, dass die Breite der Sensorfläche größer ist als die Abmessung in Bewegungsrichtung des Fingers.

### Bezugszeichenliste

- 1: Sensorfläche
- 2: Bildaufnahmevorrichtung
- 3: Ablaufsteuerung
- 4: Bewegungsdetektionsvorrichtung
- 5: Bildverarbeitungsvorrichtung
- 6: erster Teilbereich der Sensorfläche
- 7: Filter
- 8: Ausgangssignal
- 9: Teilbildspeicher
- 10: zweiter Teilbereich
- 11: zweiter Teilbereich
- 12: Teil der Sensorfläche 1
- 13: Berechnungseinheit
- 18: Bewegungsfunktion
- 21, 23: tatsächliche Bewegungsfunktionen
- 22, 24: ermittelte Bewegungsfunktionen
- 25, 26: geglättete ermittelte Bewegungsfunktionen

## Patentansprüche

1. Verfahren zur Detektion der Relativbewegung eines Fingers gegenüber einer Sensorfläche (1), das Verfahren mit den Schritten:
a) Ermitteln erster Kapazitätswert von Elektroden der Sensorfläche (1);
b) Umsetzen, in einer Bildverarbeitungsvorrichtung (5), der ersten Kapazitätswerte in ein erstes Graustufenbild;
c) Binarisieren des ersten Graustufenbildes in der Bildverarbeitungsvorrichtung (5) um ein erstes binarisiertes Bild eines ersten Teilbereiches der Sensorfläche zu erhalten;
d) Übermitteln des ersten binarisierten Bildes an eine Bewegungsdetektionsvorrichtung (4)
e) Wiederholen der Schritte a) bis c) um ein zweites binarisiertes Bild eines zweiten Teilbereiches der Sensorfläche (1) zu erhalten, wobei der zweite Teilbereich positionell versetzt ist von dem ersten Teilbereich;
f) Übermitteln des zweiten binarisierten Bildes an die Bewegungsdetektionsvorrichtung (4);
g) Ermitteln, in der Bewegungsdetektionsvorrichtung (4), von Bewegung des Fingers basierend auf dem ersten binarisierten Bild und dem zweiten binarisierten Bild,
wobei die Bewegung des Fingers über mehrere Zeilen der Sensorfläche verfolgt wird.

2. Verfahren gemäß Anspruch 1,
wobei beim Ermitteln von Bewegung ermittelt wird, dass der Finger in den zweiten Teilbereich der Sensorfläche bewegt wurde.

3. Verfahren gemäß Anspruch 1,
wobei beim Ermitteln von Bewegung, die Bewegung des Fingers ermittelt wird mittels eines Verschiebens der Koordinaten des zweiten Teilbereiches in den Bereich der Sensorfläche (1) angrenzend zu dem bisherigen zweiten Teilbereich oder angrenzend zu dem zweiten Teilbereich mit der höchsten Korrelation, und ein nachfolgendes Vergleichen von zweiten binarisierten Bildern aufgenommen im neu festgelegten zweiten Teilbereich oder aufgenommen in neu festgelegten zweiten Teilbereichen mit dem ersten binarisierten Bild.

4. Verfahren gemäß Anspruch 1,
wobei die Bewegung des Fingers mittels einer Berechnungseinheit (13) der Bewegungsdetektionsvorrichtung (4) als eine Bewegungsfunktion verfolgt wird.

5. Verfahren gemäß Anspruch 1,
wobei die Sensorfläche ein Touchpad ist und die Bewegung des Fingers in jede Richtung eines zweidimensionalen Koordinatensystems des Touchpads ermittelbar ist.

6. Verfahren gemäß Anspruch 5,
wobei das Touchpad in einem Mobiltelefon bereitgestellt ist.

7. Verfahren gemäß Anspruch 1,
wobei beim Ermitteln von Bewegung, die Bewegung des Fingers mittels eines Vergleiches des ersten binarisierten Bildes mit dem zweiten binarisierten Bild ermittelt wird.

8. Verfahren zur Detektion der Relativbewegung eines Fingers gegenüber einer Sensorfläche (1), das Verfahren mit den Schritten:
a) Ermitteln erster Kapazitätswert von Elektroden der Sensorfläche (1);
b) Umsetzen, in einer Bildverarbeitungsvorrichtung (5), der ersten Kapazitätswerte in ein erstes Graustufenbild;
c) Binarisieren des ersten Graustufenbildes in der Bildverarbeitungsvorrichtung (5) um ein erstes binarisiertes Teilbild zu erhalten;
d) Übermitteln des ersten binarisierten Teilbildes an eine Bewegungsdetektionsvorrichtung (4)
e) Wiederholen der Schritte a) bis c) um ein zweites binarisiertes Teilbild basieremd auf zweiten Kapazitätswerten von Elektroden der Sensorfläche (1) zu erhalten, wobei das zweite binarisierte Teilbild positionell versetzt ist von dem ersten binarisierten Teilbild;
f) Übermitteln des zweiten binarisierten Teilbildes an die Bewegungsdetektionsvorrichtung (4);
g) Ermitteln, in der Bewegungsdetektionsvorrichtung (4), von Bewegung des Fingers basierend auf dem ersten binarisierten Teilbild und dem zweiten binarisierten Teilbild.

9. Verfahren gemäß Anspruch 8,
wobei beim Ermitteln von Bewegung, ermittelt wird, dass der Finger von einem ersten Teilbereich der Sensorfläche (1) in einen zweiten Teilbereich der Sensorfläche (1) bewegt wurde.

10. Verfahren gemäß Anspruch 8,
wobei die Bewegung des Fingers über mehrere Zeilen der Sensorfläche (1) verfolgt wird.

11. Verfahren gemäß Anspruch 8,
wobei beim Ermitteln von Bewegung, die Bewegung des Fingers ermittelt wird mittels Verschiebens der Koordinaten eines zweiten Teilbereiches der Sensorfläche (1) angrenzend zu dem bisherigen zweiten Teilbereich oder angrenzend zu dem zweiten Teilbereich mit der höchsten Korrelation, und nachfolgend Vergleichen zweiter binarisierter Teilbilder aufgenommen im neu festgelegten zweiten Teilbereich (11) oder aufgenommen in neu festgelegten zweiten Teilbereichen mit dem ersten binarisierten Bild.

12. Verfahren gemäß Anspruch 8,
wobei die Bewegung des Fingers mittels einer Berechnungseinheit (13) der Bewegungsdetektionsvorrichtung (4) als eine Bewegungsfunktion verfolgt wird.

13. Verfahren gemäß Anspruch 8,
wobei die Sensorfläche ein Touchpad ist und die Bewegung des Fingers in jede Richtung eines zweidimensionalen Koordinatensystems des Touchpads ermittelbar ist.

14. Verfahren gemäß Anspruch 13,
wobei das Touchpad in einem Mobiltelefon bereitgestellt ist.

15. Verfahren gemäß Anspruch 8,
wobei beim Ermitteln von Bewegung, die Bewegung des Fingers mittels eines Vergleiches des ersten binarisierten Teilbildes mit dem zweiten binarisierten Teilbild ermittelt wird.
